Europäisches Patentamt

European Patent Office

Office européen des brevets

(19)

(11) Veröffentlichungsnummer: **0 143 772**
A2

(12) # EUROPÄISCHE PATENTANMELDUNG

(21) Anmeldenummer: 84890196.3

(22) Anmeldetag: 22.10.84

(51) Int. Cl.⁴: **C 23 F 13/02**, B 60 R 16/02

(30) Priorität: 25.10.83 AT 3786/83

(43) Veröffentlichungstag der Anmeldung: 05.06.85
Patentblatt 85/23

(84) Benannte Vertragsstaaten: AT BE CH DE FR GB IT LI LU NL SE

(71) Anmelder: **Padinger, Reinhard, Dipl.-Ing., Köppling 102, A-8565 St. Johann o.H. (AT)**

(72) Erfinder: **Padinger, Reinhard, Dipl.-Ing., Köppling 102, A-8565 St. Johann o.H. (AT)**

(74) Vertreter: **Gibler, Ferdinand, Dipl.Ing.Dr.tech., Dorotheergasse 7, A-1010 Wien (AT)**

(54) **Elektrisches Korrosionsschutzgerät für Fahrzeuge.**

(57) Vorrichtung für den kathodischen Korrosionsschutz bei einem Fahrzeug, bei der ein Bodenkontakt isoliert an dem Fahrzeug befestigt und mit dem positiven Pol einer Spannungsquelle verbunden ist, deren negativer Pol mit dem Fahrzeug verbunden ist, wobei gegebenenfalls eine Potentialanzeigeeinrichtung vorgesehen ist.

EP 0 143 772 A2

- 1 -

## Elektrisches Korrosionsschutzgerät für Fahrzeuge

Die Erfindung bezieht sich auf eine Vorrichtung für den
kathodischen Korrosionsschutz bei Fahrzeugen wobei das
Fahrzeug gegenüber dem Umgebungspotential elektrisch
negativ aufgeladen wird, sodaß bei Anwesenheit eines Elektrolyten (z.B. Salzwasser) ein Gleichstrom von der Umgebung
zum Fahrzeug fließt, der der Abwanderung von positiv geladenen Metallionen vom Fahrzeug entgegenwirkt.

Bei stationären Anlagen wie Stahlbehälter, Stahlrohrleitungen
und dgl. ist es bekannt über diese einen Gleichstrom fließen
zu lassen, der der Abtragung von Metallionen entgegenwirkt.
Dabei wird bei einem zu erwartenden Angriff durch korrosive Medien, wie z.B.
Salz oder Salzlösungen, der zu schützende Bauteil als Kathode geschaltet,
weshalb diese aktive Korrosionsschutzmaßnahme meist als
"kathodischer Korrosionsschutz" bezeichnet wird.

Besondere Probleme im Hinblick auf den Korrosionsschutz ergeben sich bei Fahrzeugen, insbesondere seit Beginn der Salzstreuung auf den Straßen zur Vermeidung von Schnee- und Eisglätte, wodurch die Fahrzeuge einer erheblichen Korrosionsbelastung ausgesetzt sind. Dadurch kommt es zum Durchrosten
von Karosserie- und Rahmenteilen des Fahrzeuges die zu einer Gefährdung der Verkehrs- und Betriebssicherheit und einer Verkürzung der Nutzungsdauer des Fahrzeuges führen. Um dies einzudämmen werden heute meist Anstriche oder Beschichtungen auf den exponierten Stellen, wie z.B. Bodenplatte oder Hohlräume aufgebracht. Diese Schutzmaßnahmen weisen aber den Nachteil auf, daß die Anstriche häufig kontrolliert und ausgebessert werden müssen. Außerdem bereiten die Beschichtungen Schwierigkeiten bei Reparaturarbeiten.

Ziel der Erfindung ist es, diese Nachteile zu vermeiden und eine Einrichtung der eingangs erwähnten Art vorzuschlagen, die einen optimalen Korrosionsschutz für Fahrzeuge ermöglicht.

Erfindungsgemäß wird dies dadurch erreicht, daß sie einen Bodenkontakt, beispielsweise einen Schleifkontakt mit einer für dessen elektrisch isolierte Befestigung am Fahrzeug geeigneten Befestigungseinrichtung, so gestaltet, daß er insbesondere auch während der Fortbewegung des Fahrzeuges den Erdboden berührt, wobei der Bodenkontakt an den positiven Pol einer am Fahrzeug mitgeführten Strom- bzw. Spannungsquelle die beispielsweise aus der Autobatterie bestehen kann, anschließbar ist und deren negativer Pol mit dem Fahrzeug verbindbar ist, sowie gegebenenfalls eine Potentialanzeigeeinrichtung beispielsweise ein hochohmiges Voltmeter oder eine Leuchtdiode umfaßt. Auf diese Weise wird erreicht, daß die Karosserie gegenüber der Umgebung und dem allenfalls auf der Straße befindlichen Salzwasser od. dgl. auf einem negativen Potential gehalten wird, wodurch es über das als Elektrolyt wirkende Salzwasser zum Fließen eines "kathodischen Schutzstroms" aufgrund der Potentialdifferenz kommt. Dieser Strom verhindert das Abtragen der positiv geladenen Metallionen, wodurch ein sehr wirksamer Korrosionsschutz erreicht wird.

Zur Ausbildung eines ausreichenden Schutzstromes genügt es, wenn das Fahrzeug gegenüber der Umgebung auf einem Potential von etwa minus 0,9 Volt gehalten wird.

Der Schleifkontakt wird zweckmäßigerweise über eine geeignete Strombegrenzungseinrichtung wie z.B. eine Sicherung mit einer Spannungsquelle, z.B. der Autobatterie, verbunden.

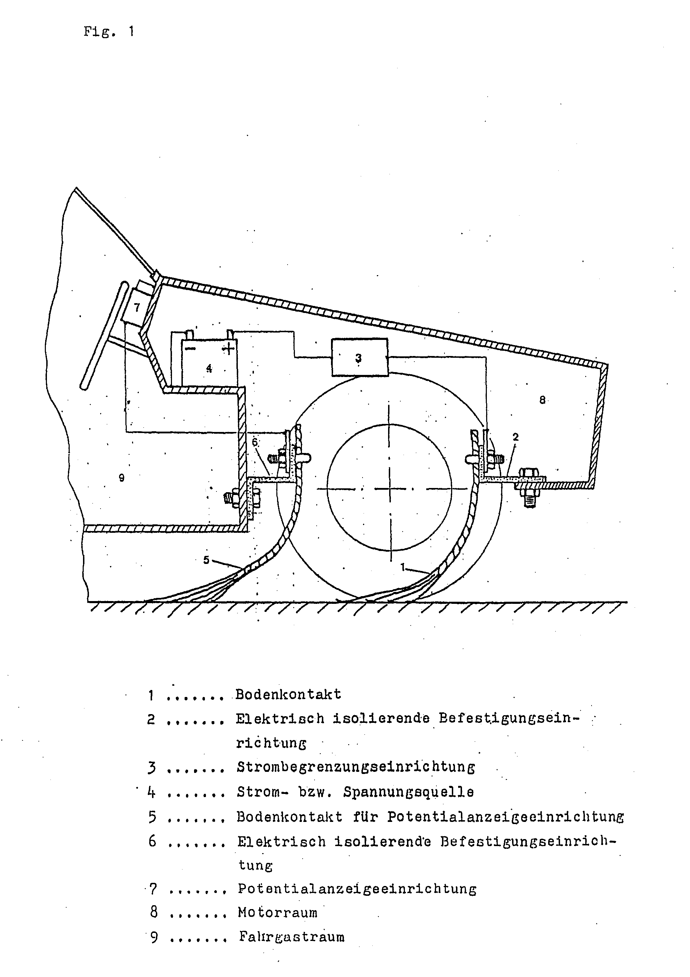

Die Erfindung wird nun an Hand der Zeichnung näher erläutert.

An dem Fahrzeug sind Bodenkontakte 1 und 5 befestigt, die z.B. aus Stahldraht bestehen. Bodenkontakte sind seit langem bekannt um die Fahrzeuge zu erden, wobei solche Bodenkontakte bisher stets leitend mit der Karosserie verbunden waren.

Gemäß der Erfindung sind die Bodenkontakte 1 und 5 über einen Träger 2 bzw. 6 aus einem elektrisch isolierenden Material an der Karosserie 8 befestigt.

Der Bodenkontakt 5 ist mit einer Potentialanzeigeeinrichtung 7 verbunden. Diese kann z.B. durch eine Leuchtdiode oder eine Spannungsmeßeinrichtung z.B. ein hochohmiges Voltmeter gebildet sein und ist mit der Karosserie 8 elektrisch leitend verbunden.

Die Karosserie 8 selbst ist mit dem negativen Pol der als Spannungsquelle dienenden Autobatterie 4 verbunden. Der Bodenkontakt 1 ist dagegen über eine Strombegrenzungseinrichtung 3 z.B. eine Sicherung mit dem positiven Pol der Autobatterie 4 verbunden.

Die Potentialanzeigeeinrichtung 7 ist zweckmäßigerweise im Fahrgastraum 9 angeordnet um eine ständige Kontrolle zu ermöglichen.

Durch die Verbindung des Erdbodens über den Bodenkontakt 1 mit dem positiven Pol der Batterie 3 und durch die Verbindung der Karosserie mit dem negativen Pol der Batterie 3 wird erreicht, daß die Karosserie gegenüber dem Boden bzw. der Umgebung ein negatives Potential einnimmt.

- 4 -

Die auf diese Weise erzwungene Spannung zwischen der Karosserie und der Stelle an der der Bodenkontakt mit dem Erdboden in Berührung steht, führt dazu, daß sich in dem durch das am Fahrzeug und dem ERdboden befindliche Salzwasser geschlossenen Stromkreis ein Gleichstrom einstellt, wobei dieser Stromfluß das Abtragen der positiven Metallionen und damit eine Korrosion verhindert.

- 1 -

Patentanspruch:

1. Vorrichtung für den kathodischen Korrosionsschutz bei Fahrzeugen wobei das Fahrzeug gegenüber dem Umgebungspotential elektrisch negativ aufgeladen wird, sodaß bei Anwesenheit eines Elektrolyten (z.B. Salzwasser) ein Gleichstrom von der Umgebung zum Fahrzeug fließt, der der Abwanderung von positiv geladenen Metallionen vom Fahrzeug entgegenwirkt,
dadurch gekennzeichnet,
daß sie einen Bodenkontakt (1), beispielsweise einen Schleifkontakt mit einer für dessen elektrisch isolierte Befestigung am Fahrzeug geeigneten Befestigungseinrichtung (2), so gestaltet, daß er insbesondere auch während der Fortbewegung des Fahrzeuges den Erdboden berührt, wobei der Bodenkontakt (1) an den positiven Pol einer am Fahrzeug mitgeführten Strom- bzw. Spannungsquelle (4), die beispielsweise aus der Autobatterie bestehen kann, anschließbar ist und deren negativer Pol mit dem Fahrzeug verbindbar ist, sowie gegebenenfalls eine Potentialanzeigeeinrichtung (7) beispielsweise ein hochohmiges Voltmeter oder eine Leuchtdiode umfaßt.

0143772

1|1

Fig. 1

1 ....... Bodenkontakt

2 ....... Elektrisch isolierende Befestigungseinrichtung

3 ....... Strombegrenzungseinrichtung

4 ....... Strom- bzw. Spannungsquelle

5 ....... Bodenkontakt für Potentialanzeigeeinrichtung

6 ....... Elektrisch isolierende Befestigungseinrichtung

7 ....... Potentialanzeigeeinrichtung

8 ....... Motorraum

9 ....... Fahrgastraum